# FASCICULE DE BREVET EUROPEEN

(11) **EP 4 466 994 B1**
(45) Date de publication et mention de la délivrance du brevet: **15.10.2025**
(21) Numéro de dépôt: 24167889.5
(22) Date de dépôt: 29.03.2024
(51) Int. Cl.: A01M 7/00, B05B 1/20, B05B 12/04, B05B 15/658

(54) **RAMPE DE PULVERISATION COMPORTANT AU MOINS UN TRONÇON DE CONDUIT SECONDAIRE**
SPRÜHBALKEN MIT MINDESTENS EINEM SEKUNDÄRROHRABSCHNITT
SPRAY BAR COMPRISING AT LEAST ONE SECONDARY CONDUIT SECTION

(30) Priorité: 24.05.2023 FR 2305115
(43) Date de publication de la demande: 27.11.2024
(73) Titulaire: Exel Industries, 51200 Epernay (FR)
(72) Inventeur: PITAUD, Sylvain, 01990 CHANEINS (FR)
(74) Mandataire: Bandpay & Greuter

(56) Documents cités:
- WO-A1-2020/092686
- WO-A1-2020/149457
- WO-A1-2020/199025
- WO-A1-2021/257993

## Description

### DOMAINE TECHNIQUE

La présente invention concerne le domaine des systèmes de pulvérisation agricoles. Plus précisément, l'invention concerne une rampe de pulvérisation, comportant un conduit principal et au moins un porte-buses relié au conduit principal ainsi qu'un tronçon de conduit secondaire.

### ETAT DE LA TECHNIQUE

Une rampe de pulvérisation agricole comprend généralement des portes-buses répartis de manière uniforme sur toute la longueur de la rampe de pulvérisation, pour pulvériser du produit phytosanitaire sur des rangs de végétaux, sous forme liquide ou d'engrais liquide par exemples. En particulier, la rampe de pulvérisation connue est conçue pour pulvériser du liquide sur le champ, sans prendre en compte le type de plantation de la culture, c'est-à-dire la largeur des rangs de culture.

La rampe comporte une pluralité de buses espacées les unes des autres, ledit espacement étant fixe et les buses permettant un double voir un triple recouvrement de la surface pulvérisée par le liquide. La rampe connue permet une pulvérisation de l'ensemble du champ, plutôt qu'une pulvérisation en ligne. Une telle pulvérisation peut, en fonction du besoin de l'utilisateur, pulvériser une plus grande quantité de liquide que nécessaire, et donc engendrer une perte économique et une pollution des sols.

Il est également connu des systèmes de pulvérisation sur des rangs de cultures combinés avec une bineuse. Ces systèmes de pulvérisation permettent une pulvérisation plus localisée des sols. Toutefois, le binage s'effectue davantage en plein soleil, de sorte à déshydrater les herbes arrachées, alors que la pulvérisation s'effectue davantage en début de journée, lorsque le soleil n'est pas encore présent, leur combinaison n'est donc pas compatible. De plus, la vitesse de travail du binage est proche de 5km/h, quand la vitesse de travail de la pulvérisation s'effectue davantage vers les 15 km/h. Ainsi, les systèmes de pulvérisation sur des rangs de cultures combinés avec une bineuse n'effectuent une pulvérisation qu'à très faible vitesse, à savoir typiquement 5km/h. La pulvérisation n'est donc pas effectuée dans de bonnes conditions pour l'utilisateur.

L'invention vise à résoudre les inconvénients de l'état de la technique susmentionnés, notamment en proposant une rampe de pulvérisation comprenant au moins un porte-buses
WO 2020/092686 A1 divulgue un système de pulvérisation de liquide ayant une rampe d'alimentation en liquide allongée et une pluralité d'ensembles buses de pulvérisation. Les ensembles buses de pulvérisation ont un corps de buse ayant une entrée de liquide et une première buse de pulvérisation portant une section de sortie de liquide sur des côtés supérieur et inférieur opposés, des deuxième et troisième sections de sortie de liquide portant des sections de sortie de liquide disposées selon une relation transversale avec la rampe d'alimentation ; et des première et deuxième sections de support de soupape de retenue disposées parallèlement à la rampe d'alimentation en liquide. Ce document ne divulgue pas de tronçon de conduit secondaire s'étendant parallèlement à un conduit principal afin de régler le débit de pulvérisation du produit liquide.

### PRESENTATION DE L'INVENTION

Plus précisément, l'invention a pour objet une rampe de pulvérisation pour pulvérisateur agricole. Ladite rampe de pulvérisation comporte un conduit principal et au moins un porte-buses relié audit conduit principal et comprend :
- un corps logeant une conduite d'admission de liquide configurée pour être alimentée en liquide par ledit conduit principal et logeant au moins un moyen de régulation de débit ;
- au moins une première buse de pulvérisation ;
- au moins un tronçon de conduit secondaire s'étendant parallèlement au conduit principal ;
- au moins un groupe de buses de pulvérisation réparties sur le tronçon de conduit secondaire.

Ledit au moins un moyen de régulation de débit est agencé à l'interface entre la conduite d'admission, la première buse de pulvérisation et le tronçon de conduit secondaire et comporte une entrée de liquide et au moins une première sortie et une seconde sortie commandables disposées en aval dudit conduit principal, l'entrée et chaque sortie étant commandables entre une position ouverte et une position fermée. La première buse de pulvérisation est reliée à l'une des sorties du moyen de régulation de débit et le tronçon de conduit secondaire est relié à l'autre des sorties du moyen de régulation de débit. Dans la position ouverte de l'entrée de liquide, ledit moyen de régulation de débit est configuré pour permettre l'alimentation de la première buse et/ou du groupe de buses en liquide et, dans la position fermée de ladite entrée de liquide, ledit moyen de régulation de débit est configuré pour empêcher l'alimentation de la première buse et/ou du groupe de buses en liquide. Dans la position ouverte de la sortie reliée à la première buse de liquide, ledit moyen de régulation de débit est configuré pour permettre l'alimentation de la première buse et, dans la position fermée de ladite sortie de liquide, ledit moyen de régulation de débit est configuré pour empêcher l'alimentation de la première buse. Dans la position ouverte de l'autre sortie de liquide, ledit moyen de régulation de débit est configuré pour permettre l'alimentation du tronçon de conduit secondaire et, dans la position fermée de ladite autre sortie de liquide, ledit moyen de régulation de débit est configuré permettant de s'adapter au produit à pulvériser et au type de pulvérisation souhaitée, c'est-à-dire de l'ensemble du champ ou localisée, tout en maintenant une vitesse de travail de pulvérisation. pour empêcher l'alimentation du tronçon de conduit secondaire. Ladite rampe de pulvérisation est configurée pour pulvériser du liquide par ladite première buse de pulvérisation et/ou par au moins une buse dudit groupe de buses de pulvérisation.

Le moyen de régulation de débit peut ainsi permettre l'acheminement du liquide vers la première sortie et donc vers la première buse et vers la seconde sortie et donc vers le groupe de buses. La rampe de pulvérisation présente ainsi, au moins, un premier niveau de pulvérisation avec la première buse de pulvérisation et un deuxième niveau de pulvérisation avec le groupe de buses de pulvérisation réparties sur le tronçon de conduit secondaire. Le premier niveau peut par exemple être adapté à un premier type de pulvérisation comme la pulvérisation de l'ensemble du champ, et le deuxième niveau à un second type de pulvérisation comme la pulvérisation localisée. Sur une seule rampe, l'utilisateur peut donc appliquer deux types différents de pulvérisation. De plus, les buses du groupe de buses peuvent être réparties de manière adaptable sur le tronçon de conduit secondaire, et donc permettre une pulvérisation adaptée au besoin de l'utilisateur et/ou en fonction du liquide à pulvériser.

Avantageusement, le moyen de régulation de débit comporte deux vannes commandables, une première vanne commandable étant agencée à l'interface entre la conduite d'admission et le tronçon de conduit secondaire et une seconde vanne commandable étant agencée à l'interface entre la conduite d'admission et la première buse de pulvérisation, la première sortie du moyen de régulation de débit correspondant à la sortie de la première vanne et la seconde sortie du moyen de régulation de débit correspondant à la sortie de la seconde vanne.

Avantageusement, le groupe de buses de pulvérisation comporte au moins deux buses de pulvérisation reliées entre elles par le tronçon de conduit secondaire, ledit tronçon de conduit secondaire étant configuré pour acheminer du liquide du moyen de régulation de débit vers chaque buse dudit groupe de buses de pulvérisation.

Les buses du groupes de buses de pulvérisation permettent une pulvérisation du liquide acheminé à intervalle déterminé par leur espacement. Leur espacement varie donc en fonction du besoin de l'utilisateur et s'adapte à ses besoins. Par exemple, l'utilisateur peut déterminer que l'espace entre ses buses du groupe de buses correspond à l'espacement entre ses rangs, de sorte à faire une pulvérisation sur rang ou en inter-rang, notamment pour le désherbage, avec le groupe de buses.

Avantageusement, une pluralité de soupapes commandables est agencée dans ledit tronçon de conduit secondaire, chaque soupape de ladite pluralité de soupapes étant associée à l'une des buses du groupe de buses et chaque soupape étant mobile entre une position de fermeture dans laquelle elle est configurée pour empêcher l'acheminement dudit liquide depuis l'organe de régulation de débit vers la buse à laquelle elle est associée et une position d'ouverture dans laquelle elle est configurée pour permettre l'acheminement dudit liquide depuis l'organe de régulation de débit vers la buse à laquelle elle est associée.

Les soupapes permettent une commande des buses du groupe de buses de manière individuelle. En particulier, l'utilisateur peut déterminer la position de chaque soupape, entre sa position de fermeture et sa position d'ouverture, afin d'encore mieux adapter la rampe de pulvérisation à son besoin.

Avantageusement, les buses de pulvérisation du groupe de buses de pulvérisation sont équidistantes les unes des autres.

Un tel agencement peut permettre, en particulier, une pulvérisation sur rang ou en inter-rang.

Avantageusement, les buses de pulvérisation du groupe de buses de pulvérisation sont espacées de 5 à 25 cm.

Avantageusement, la première buse de pulvérisation et/ou au moins une buse de pulvérisation du groupe de buses de pulvérisation est inclinée par rapport au conduit principal.

L'inclinaison des buses permet d'adapter le spectre de pulvérisation des buses. En particulier, il est ainsi permis de resserrer les spectres de pulvérisation des buses de sorte à limiter la largeur de champ pulvérisé, tout en conservant la même hauteur de buses.

Avantageusement, ladite rampe comporte une pluralité de porte-buses, chaque porte-buses étant relié audit conduit principal.

La pluralité de porte-buses permet d'avoir une encore plus grande modularité de la rampe, puisque chaque groupe de buses peut présenter un agencement différent, spécifique au besoin de l'utilisateur.

Avantageusement, les porte-buses de la pluralité de porte-buses sont équidistants les uns des autres.

Avantageusement, les porte-buses de la pluralité de porte-buses sont espacées 25 cm, ou 33 cm ou 50 cm.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une vue en perspective, depuis l'arrière-gauche d'un porte-buses relié à une rampe selon l'invention, ledit porte-buses comportant une première buse, deux tronçons de conduit secondaire reliant les trois buses du groupe de buses ;
La figure 2 est une vue de face du porte-buses relié à la rampe de la figure 1 ;
La figure 3 est une vue semblable à la figure 1 mais prise depuis le haut et la gauche ;
La figure 4 est une vue semblable à la figure 1 mais prise depuis la gauche ;
La figure 5 est une vue de derrière et de haut du porte-buses relié à la rampe de la figure 1 ;
La figure 6 est une vue semblable à la figure 5 mais avec un porte-buses dont le groupe de buses comporte cinq buses, plutôt que trois ; et
La figure 7 est une vue semblable à la figure 5 mais avec un porte-buses dont le groupe de buses comporte deux buses, plutôt que trois et donc un seul tronçon de conduit secondaire.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne une rampe de pulvérisation 1. La rampe de pulvérisation 1 est en particulier destinée à être portée ou trainée par un véhicule, en particulier un engin agricole, ici un pulvérisateur agricole.

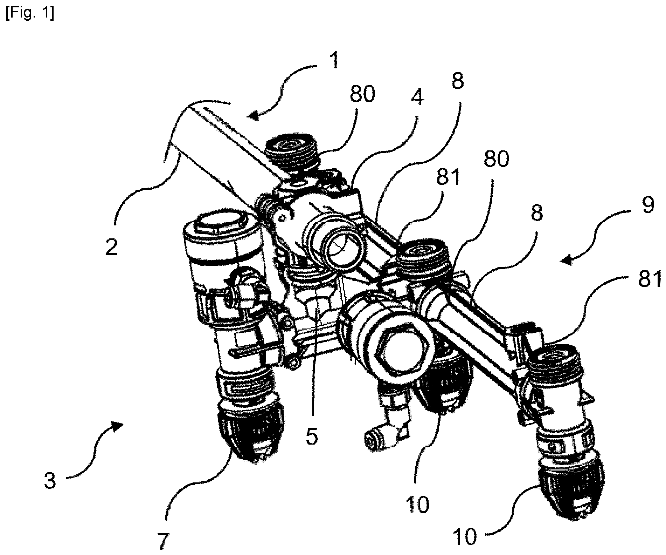

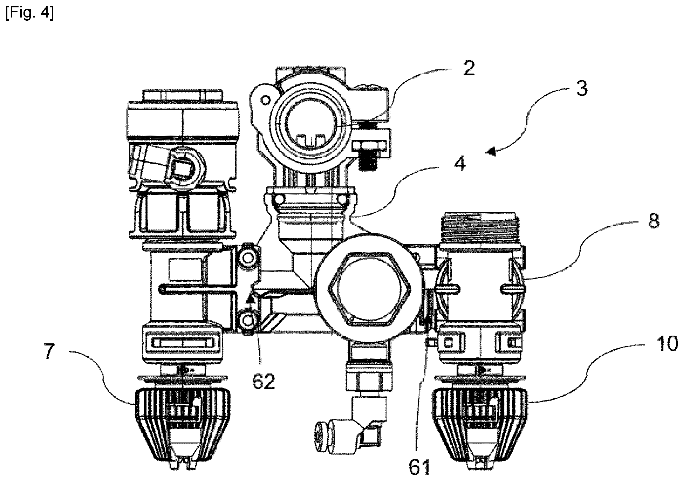

Tel que cela est représenté sur les figures 1 à 7, la rampe de pulvérisation 1 comporte un conduit principal 2 et au moins un porte-buses 3.

La figure 1 représente une portion du conduit principal 2 auquel est relié le porte-buses 3.

En particulier, le porte-buses 3 comporte un corps 4. Le corps 4 a pour fonction de loger les différents composants du porte-buses 3 et de relier le porte-buses 3 au conduit principal 2.

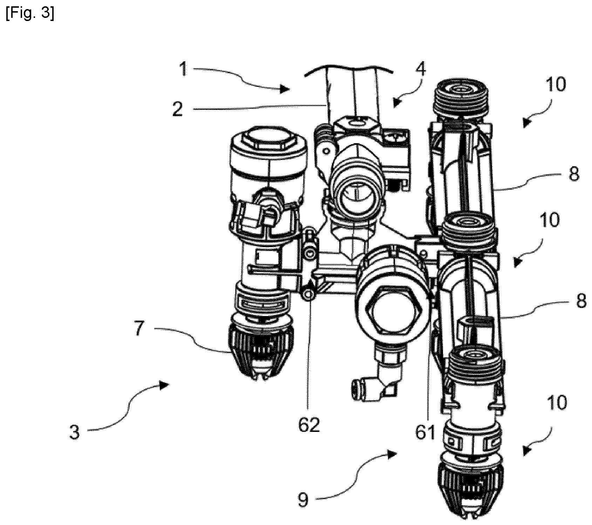

Tel que représenté sur la figure 3, le corps 4 comporte une partie supérieure présentant deux mors reliés et fixés au moyen d'un système de fixation, ici un système vis écrou, au conduit principal 2. Les mors délimitent un orifice configuré pour loger le conduit principal 2. Ainsi, le porte-buses 3 est montable et démontable du conduit principal 2.

Le corps 4 loge une conduite d'admission 5 de liquide, comme représenté sur la figure 1, par exemple de liquide phytosanitaire. La conduite d'admission 5 est configurée pour être alimentée en liquide par le conduit principal 2.

De plus, le corps 4 loge au moins un moyen de régulation de débit.

En particulier, le moyen de régulation de débit comporte au moins une vanne commandable. La vanne peut par exemple s'étendre transversalement au conduit principal 2.

La conduite d'admission 5 relie le conduit principal 2 au moyen de régulation de débit.

Le porte-buses 3 comporte en outre au moins une première buse de pulvérisation 7, visible en particulier sur les figures 1, 3 et 4, au moins un tronçon de conduit secondaire 8 et au moins un groupe de buses de pulvérisation 9.

Le tronçon de conduit secondaire 8 correspond à un tube présentant deux extrémités, une première extrémité 80 et une seconde extrémité 81, toutes deux débouchantes.

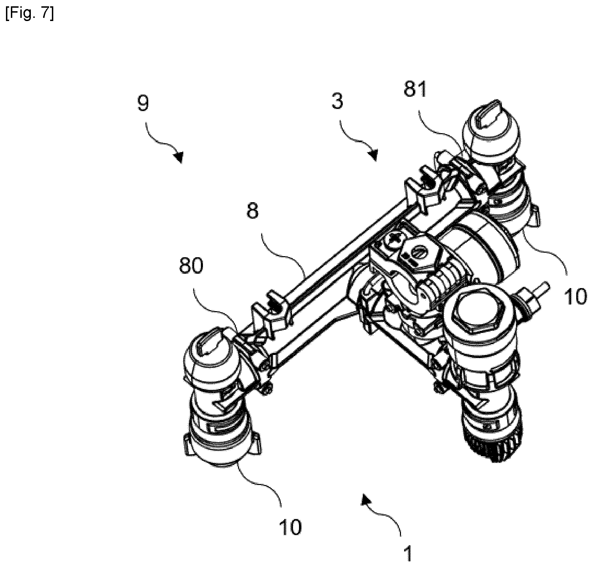

Avantageusement et tel que représenté sur la figure 7, le groupe de buses de pulvérisation 9 comporte au moins deux buses de pulvérisation 10. Les deux buses de pulvérisation 10 sont reliées entre elles par le tronçon de conduit secondaire 8. En particulier, chacune des deux buses 10 est placée à l'une des extrémités 80, 81 du tronçon de conduit secondaire 8.

Le tronçon de conduit secondaire 8 est configuré pour acheminer du liquide, par exemple le liquide phytosanitaire, du moyen de régulation de débit vers chaque buse 10 du groupe de buses de pulvérisation 9.

En particulier, les buses du groupe de buses de pulvérisation 9 sont réparties sur le tronçon du conduit secondaire 8.

Selon un autre mode de réalisation et tel qu'illustré sur les figures 1 à 3 et 5, le groupe de buses de pulvérisation 9 peut comporter trois buses de pulvérisation 10. Dans ce mode de réalisation, le porte-buses 3 comporte deux tronçons de conduit secondaires 8. Les trois buses de pulvérisation 10 sont reliées entre elles par les deux tronçons de conduit secondaires 8. Chaque tronçon de conduit secondaire 8 présente alors une première extrémité 80 et une seconde extrémité 81.

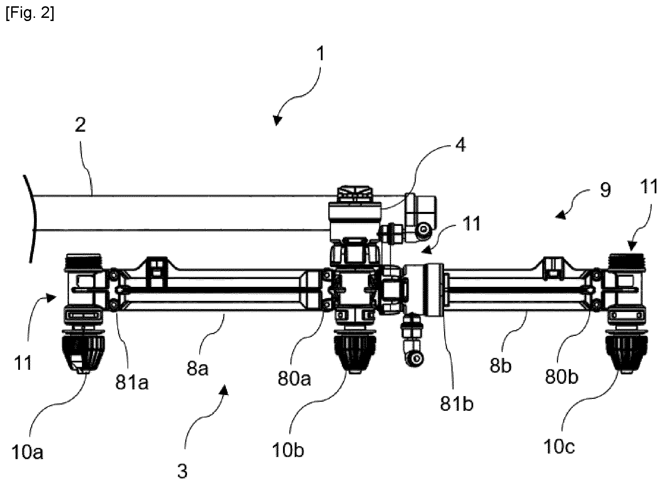

Tel que cela est illustré sur la figure 2, une première buse 10a du groupe de buses 9 est reliée à la seconde extrémité 81a du premier tronçon de conduit secondaire 8a. Une deuxième buse 10b est reliée d'une part à la première extrémité 80a du premier tronçon de conduit secondaire 8a et d'autre part, à la seconde extrémité 81b du deuxième tronçon de conduit secondaire 8b. Une troisième buse 10c est reliée à la première extrémité 80b du deuxième tronçon de conduit secondaire 8b.

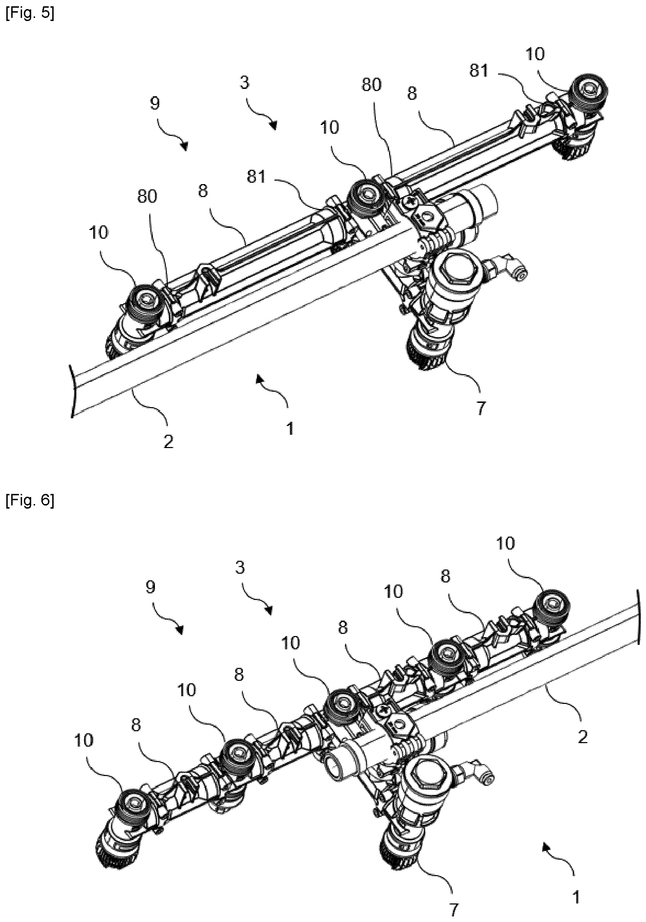

Selon encore un autre mode de réalisation illustré sur la figure 6, le groupe de buses de pulvérisation 9 comporte cinq buses de pulvérisation 10 reliées entre elles par des tronçons de conduits secondaires 8, ici le porte-buses 3 comporte quatre tronçons de conduits secondaires 8.

Le groupe de buses de pulvérisation 9 peut comporter autant de buses de pulvérisation 9 que souhaité par l'utilisateur.

En particulier, le groupe de buses de pulvérisation 9 peut comporter n buses de pulvérisation 10, le porte-buses comporte alors n - 1 tronçons de conduits secondaires 8. Lesdits tronçons de conduits secondaires 8 relient par chacune de leurs extrémités les buses de pulvérisation 10 entre elles.

De plus, tel que cela est représenté sur les figures, les buses de pulvérisation 10 du groupe de buses de pulvérisation 9 sont équidistantes les unes aux autres. En particulier, les tronçons de conduits secondaires 8 ont tous la même longueur.

Avantageusement, les buses de pulvérisation 10 du groupe de buses de pulvérisation 9 sont espacées de 5 à 25 cm.

Selon un mode de réalisation non représenté, les buses de pulvérisation 10 du groupe de buses de pulvérisation 9 ont un espacement variable entre elles. En particulier, les tronçons de conduits secondaires 8 peuvent avoir des longueurs différentes, s'adaptant ainsi au besoin spécifique de chaque utilisateur.

Les buses 10 du groupes de buses de pulvérisation 9 permettent une pulvérisation du liquide acheminé à intervalle déterminé par leur espacement. Leur espacement varie donc en fonction du besoin de l'utilisateur. Par exemple, l'utilisateur peut déterminer que l'espace entre ses buses 10 du groupe de buses 9 correspond à l'espacement entre les rangs de végétation de son champ, de sorte à faire une pulvérisation sur rang avec le groupe de buses 9.

Le groupe de buses de pulvérisation 9 permet ainsi une pulvérisation localisée.

Selon un premier mode de réalisation, le moyen de régulation de débit comporte une vanne commandable agencée à l'interface entre la conduite d'admission 5, la première buse de pulvérisation 7 et le tronçon de conduit secondaire 8.

La vanne commandable comporte une entrée de liquide, par exemple du liquide phytosanitaire, et au moins une première sortie et une seconde sortie. L'entrée et chacune des sorties sont commandables.

En particulier, l'entrée est commandable entre une position ouverte et une position fermée.

La première sortie est commandable entre une position ouverte et une position fermée.

La seconde sortie est commandable entre une position ouverte et une position fermée.

La première sortie et la seconde sortie sont disposées en aval du conduit principal 2.

La première buse de pulvérisation 7 est reliée à la première sortie commandable de la vanne commandable. Le tronçon de conduit secondaire 8 est relié à la seconde sortie commandable de la vanne commandable.

Dans la position ouverte de l'entrée de liquide, la vanne commandable est configurée pour permettre l'alimentation en liquide de la première buse 7 et/ou du groupe de buses 9. Dans la position fermée de l'entrée de liquide, la vanne commandable est configurée pour empêcher l'alimentation en liquide de la première buse 7 et/ou du groupe de buses 9.

Dans la position ouverte de la première sortie du liquide, la vanne commandable est configurée pour permettre l'alimentation en liquide de la première buse 7. Dans la position fermée de la première sortie du liquide, la vanne commandable est configurée pour empêcher l'alimentation en liquide de la première buse 7.

Dans la position ouverte de la seconde sortie du liquide, la vanne commandable est configurée pour permettre l'alimentation en liquide du tronçon de conduit secondaire 8. Dans la position fermée de la seconde sortie, la vanne commandable est configurée pour empêcher l'alimentation en liquide du tronçon de conduit secondaire 8.

Avantageusement, une pluralité de soupapes commandables 11 est agencée à l'extrémité du tronçon de conduit secondaire 8.

En particulier, le nombre de soupapes commandables 11 correspond au nombre de buses de pulvérisation 10 du groupe de buses 9.

Chaque soupape 11 de la pluralité de soupapes 11 est associée à une buse 10 du groupe de buses 9.

Chaque soupape 11 est mobile entre une position de fermeture et une position d'ouverture. Dans la position de fermeture, la soupape 11 est configurée pour empêcher l'acheminement du liquide depuis la seconde sortie de la vanne commandable vers la buse 10 à laquelle elle est associée. Dans la position d'ouverture, la soupape 11 est configurée pour permettre l'acheminement du liquide depuis la seconde sortie de la vanne commandable vers la buse 10 à laquelle elle est associée.

Ainsi, les soupapes 11 permettent de commander les buses 10 du groupe de buses 9 de manière individuelle. Les soupapes sont indépendantes les unes des autres. En particulier, l'utilisateur ou une unité de commande peut déterminer la position de chacune des soupapes 11, entre sa position de fermeture et sa position d'ouverture, afin d'adapter la rampe et l'aire pulvérisée aux besoins particuliers de l'utilisateur.

Du liquide, par exemple phytosanitaire, circule dans le conduit principal 2. Il s'achemine vers la conduite d'admission 5 du porte-buses 3, qu'il traverse, pour arriver au niveau de la vanne commandable, en particulier au niveau de l'entrée de la vanne commandable. Lorsque l'entrée de la vanne est en position fermée, le liquide est arrêté à ladite entrée et ne peut s'acheminer dans la vanne commandable. Lorsque l'entrée de la vanne commandable est en position ouverte, le liquide s'achemine vers la première sortie et vers la deuxième sortie.

Lorsque la première sortie est en position fermée, le liquide est arrêté à ladite sortie et ne peut s'acheminer vers la première buse de pulvérisation 7. Lorsque la première sortie est en position ouverte, le liquide s'achemine vers la première buse de pulvérisation 7, puis est pulvérisé au travers de ladite première buse de pulvérisation 7.

Lorsque la seconde sortie est en position fermée, le liquide est arrêté à ladite sortie et ne peut s'acheminer vers le tronçon de conduit secondaire 8. Lorsque la seconde sortie est en position ouverte, le liquide s'achemine vers le tronçon de conduit secondaire 8, vers les soupapes commandables 11. Lorsqu'une soupape 11 est en position de fermeture, le liquide est arrêté par la soupape et ne peut s'acheminer jusqu'à la buse 10 à laquelle la soupape 11 est associée. Lorsqu'une soupape 11 est en position d'ouverture, le liquide s'achemine vers la buse 10 à laquelle la soupape 11 est associée, puis est pulvérisé au travers de ladite buse 10.

L'ouverture et la fermeture de la vanne commandable et des soupapes 11 sont indépendantes.

Selon un autre mode de réalisation, le moyen de régulation de débit comporte une première vanne 61 et une seconde vanne 62, différentes de la vanne commandable du précédent mode de réalisation. La première vanne 61 est agencée à l'interface entre la conduite d'admission 5 et le tronçon de conduit secondaire 8 et la seconde vanne 62 est agencée à l'interface entre la conduite d'admission 5 et la première buse de pulvérisation 7.

En particulier, la première vanne 61 et la seconde vanne 62 comportent chacune une entrée et une sortie, configurées pour alimenter respectivement les buses 10 du groupe de buses 9 et la première buse de pulvérisation 7.

Chacune des entrées de la première vanne 61 et de la seconde vanne 62 est commandable entre une position ouverte et une position fermée.

Dans la position ouverte de l'entrée de la première vanne 61 commandable, cette dernière est configurée pour permettre l'alimentation en liquide du tronçon de conduit secondaire 8. Dans la position fermée de la première vanne 61, cette dernière empêche l'alimentation en liquide du tronçon de conduit secondaire 8.

Dans ce mode de réalisation, la pluralité de soupapes commandables 11, tel que décrit dans le mode de réalisation précédent, peut être agencée à l'extrémité du tronçon de conduit secondaire 8. L'agencement et le fonctionnement desdites soupapes sont inchangés par rapport au mode de réalisation précédent, à l'exception du fait que l'acheminement du liquide s'effectue de la première vanne 61 vers chacune des soupapes 11 et non de la seconde sortie de la vanne commandable vers chacune des soupapes 11.

De plus, le moyen de régulation de débit peut comporter une vanne de coupure agencée dans la conduite d'admission 5 et permettant d'alimenter la première vanne 61 et/ou la seconde vanne 62 en liquide ou au contraire, empêcher leur alimentation.

La rampe de pulvérisation 1 présente ainsi, au moins, un premier niveau de pulvérisation avec la première buse de pulvérisation 7 et un deuxième niveau de pulvérisation avec le groupe de buses de pulvérisation 9 réparties sur le tronçon de conduit secondaire 8. Le premier niveau peut par exemple être adapté à un premier type de pulvérisation et le deuxième niveau à un second type de pulvérisation.

Par exemple le premier type de pulvérisation peut correspondre à une pulvérisation de l'ensemble du champ et le deuxième type de pulvérisation peut correspondre à une pulvérisation localisée, sur rang de végétation.

Sur une seule rampe de pulvérisation, l'utilisateur peut donc appliquer deux types différents de pulvérisation. De plus, les buses 10 du groupe de buses 9 peuvent être réparties de manière adaptable sur le tronçon de conduit secondaire 8, et donc permettre une pulvérisation adaptée au besoin de l'utilisateur et/ou en fonction du liquide à pulvériser.

Avantageusement, la première buse de pulvérisation 7 et/ou au moins une buse de pulvérisation 10 du groupe de buses de pulvérisation 9 est inclinée par rapport au conduit principal 2.

L'inclinaison d'une ou de plusieurs buses, que ce soit la première buse de pulvérisation 7 et/ou au moins une buse de pulvérisation 10 du groupe de buses de pulvérisation 9 permet d'adapter leur spectre de pulvérisation. En particulier, une telle inclinaison peut permettre de resserrer les spectres de pulvérisation des buses, par exemple 10a, 10b, 10c (figure 2) de sorte à limiter la largeur de champ pulvérisé, tout en conservant la même hauteur de buses.

Avantageusement, la rampe de pulvérisation 1 comporte une pluralité de porte-buses 3 tels que précédemment décrits. En particulier, chaque porte-buses 3 est relié au conduit principal 2 de la rampe 1, de sorte à pouvoir être alimenté en liquide.

La pluralité de porte-buses 3 permet d'avoir une encore plus grande modularité de la rampe 1, puisque chaque groupe de buses 9 peut présenter un agencement différent, spécifique au besoin de l'utilisateur.

Les vannes commandables et les soupapes 11 de chaque porte-buses 3 sont indépendantes les unes des autres.

Selon un mode de réalisation particulier de l'invention, les portes-buses 3 de la pluralité de porte-buses 3 sont équidistants les uns des autres.

Avantageusement, les porte-buses ont un espacement standardisé de 25 cm, 33 cm ou 50 cm.

Selon un autre mode de réalisation, les portes-buses 3 de la pluralité de porte-buses 3 ont un espacement variable entre eux.

Avantageusement, la première buse de pulvérisation 7 est une buse configurée pour permettre un double, voir un triple recouvrement de la surface pulvérisée, et dans laquelle les buses 10 du groupe de buses de pulvérisation 9 sont des buses de pulvérisation à spectre plus étroit que la première buse de pulvérisation 7.

On notera par ailleurs que l'invention n'est pas limitée aux modes de réalisation décrits précédemment. Il apparaîtra en effet à l'homme du métier que diverses modifications peuvent être apportées aux modes de réalisation décrits ci-dessus, à la lumière de l'enseignement qui vient de lui être divulgué.

Par exemple, les buses du groupe de buses de pulvérisation peuvent être réparties sur un seul tronçon de conduit secondaire. Par exemple, si le groupe de buses de pulvérisation comporte trois buses de pulvérisation, elles peuvent être fixées sur un seul et même tronçon, une première buse peut être fixée à une première extrémité du tronçon, une deuxième buse à la seconde extrémité et une troisième buse au centre du tronçon. Dans un tel mode de réalisation, l'espacement entre les buses dépend du point de fixation sur le tronçon et la longueur du tronçon peut dépendre de la surface de champ à couvrir.

Dans la présentation détaillée de l'invention qui est faite précédemment, les termes utilisés ne doivent pas être interprétés comme limitant l'invention aux modes de réalisation exposés dans la présente description. L'étendue de la protection est déterminée par les revendications annexées.

## Revendications

1. Rampe de pulvérisation (1) pour pulvérisateur agricole, comportant un conduit principal (2) et au moins un porte-buses (3) relié audit conduit principal (2) et comprenant :
- un corps (4) logeant une conduite d'admission (5) de liquide configurée pour être alimentée en liquide par ledit conduit principal (2) et logeant au moins un moyen de régulation de débit ;
- au moins une première buse de pulvérisation (7) ;
- au moins un tronçon de conduit secondaire (8) s'étendant parallèlement au conduit principal (2) ;
- au moins un groupe de buses de pulvérisation (9) réparties sur le tronçon de conduit secondaire (8) ;
ledit au moins un moyen de régulation de débit étant agencé à l'interface entre la conduite d'admission (5), la première buse de pulvérisation (7) et le tronçon de conduit secondaire (8) et comportant une entrée de liquide et au moins une première sortie et une seconde sortie commandables disposées en aval dudit conduit principal (2), l'entrée et chaque sortie étant commandables entre une position ouverte et une position fermée, la première buse de pulvérisation (7) étant reliée à l'une des sorties du moyen de régulation de débit et le tronçon de conduit secondaire (8) étant relié à l'autre des sorties du moyen de régulation de débit,
dans la position ouverte de l'entrée de liquide, ledit moyen de régulation de débit étant configuré pour permettre l'alimentation de la première buse (7) et/ou du groupe de buses (9) en liquide et, dans la position fermée de ladite entrée de liquide, ledit moyen de régulation de débit étant configuré pour empêcher l'alimentation de la première buse (7) et/ou du groupe de buses (9) en liquide,
dans la position ouverte de la sortie reliée à la première buse (7) de liquide, ledit moyen de régulation de débit étant configuré pour permettre l'alimentation de la première buse (7) et, dans la position fermée de ladite sortie de liquide, ledit moyen de régulation de débit étant configuré pour empêcher l'alimentation de la première buse (7),
dans la position ouverte de l'autre sortie de liquide, ledit moyen de régulation de débit étant configuré pour permettre l'alimentation du tronçon de conduit secondaire (8) et, dans la position fermée de ladite autre sortie de liquide, ledit moyen de régulation de débit étant configuré pour empêcher l'alimentation du tronçon de conduit secondaire (8),
ladite rampe de pulvérisation (1) étant configurée pour pulvériser du liquide par ladite première buse de pulvérisation (7) et/ou par au moins une buse (10) dudit groupe de buses de pulvérisation (9).

2. Rampe de pulvérisation (1) selon la revendication précédente, dans laquelle le moyen de régulation de débit comporte deux vannes commandables, une première vanne commandable (61) étant agencée à l'interface entre la conduite d'admission (5) et le tronçon de conduit secondaire (8) et une seconde vanne commandable (62) étant agencée à l'interface entre la conduite d'admission (5) et la première buse de pulvérisation (7), la première sortie du moyen de régulation de débit correspondant à la sortie de la première vanne (61) et la seconde sortie du moyen de régulation de débit correspondant à la sortie de la seconde vanne (62).

3. Rampe de pulvérisation (1) selon l'une quelconque des revendications précédentes, dans laquelle le groupe de buses de pulvérisation (9) comporte au moins deux buses de pulvérisation (10) reliées entre elles par le tronçon de conduit secondaire (8), ledit tronçon de conduit secondaire (8) étant configuré pour acheminer du liquide du moyen de régulation de débit vers chaque buse (10) dudit groupe de buses de pulvérisation (9).

4. Rampe de pulvérisation (1) selon la revendication précédente, dans laquelle une pluralité de soupapes (11) commandables est agencée dans ledit tronçon de conduit secondaire (8), chaque soupape (11) de ladite pluralité de soupapes étant associée à l'une des buses (10) du groupe de buses (9) et chaque soupape (11) étant mobile entre une position de fermeture dans laquelle elle est configurée pour empêcher l'acheminement dudit liquide depuis l'organe de régulation de débit vers la buse (10) à laquelle elle est associée et une position d'ouverture dans laquelle elle est configurée pour permettre l'acheminement dudit liquide depuis l'organe de régulation de débit vers la buse (10) à laquelle elle est associée.

5. Rampe de pulvérisation (1) selon l'une quelconque des revendications précédentes, dans laquelle les buses de pulvérisation (10) du groupe de buses de pulvérisation (9) sont équidistantes les unes des autres.

6. Rampe de pulvérisation (1) selon l'une des revendications précédentes, dans laquelle les buses de pulvérisation (10) du groupe de buses de pulvérisation (9) sont espacées de 5 à 25 cm.

7. Rampe de pulvérisation (1) selon l'une quelconque des revendications précédentes, dans laquelle la première buse de pulvérisation (7) et/ou au moins une buse de pulvérisation (10) du groupe de buses de pulvérisation (9) est inclinée par rapport au conduit principal (2).

8. Rampe de pulvérisation (1) selon l'une quelconque des revendications précédentes, comportant une pluralité de porte-buses (3), chaque porte-buses (3) étant relié audit conduit principal (2).

9. Rampe de pulvérisation (1) selon la revendication précédente, dans laquelle les porte-buses (3) de la pluralité de porte-buses (3) sont équidistants les uns des autres.

10. Rampe de pulvérisation (1) selon la revendication précédente, dans laquelle les porte-buses (3) de la pluralité de porte-buses (3) sont espacées 25 cm, ou 33 cm ou 50 cm.

## Patentansprüche

1. Spritzbalken (1) für eine Landwirtschaftliche Sprühanlage, umfassend eine Hauptleitung (2) und mindestens einen Düsenhalter (3), der mit der Hauptleitung (2) verbunden ist, und umfassend:
- einen Körper (4), der eine Flüssigkeitseinlassleitung (5) beherbergt, die konfiguriert ist, um von der Hauptleitung (2) mit Flüssigkeit versorgt zu werden, und mindestens eine Durchflussregeleinrichtung aufnimmt;
- mindestens eine erste Spritzdüse (7);
- mindestens einen Nebenleitungsabschnitt (8), der sich parallel zu der Hauptleitung (2) erstreckt;
- mindestens eine Spritzdüsengruppe (9), die über den Nebenleitungsabschnitt (8) verteilt sind;
wobei die mindestens eine Durchflussregeleinrichtung an der Schnittstelle zwischen der Einlassleitung (5), der ersten Spritzdüse (7) und dem Nebenleitungsabschnitt (8) angeordnet ist und einen Flüssigkeitseinlass und mindestens einen ersten steuerbaren Ausgang und einen zweiten steuerbaren Ausgang umfasst, die stromabwärts von der Hauptleitung (2) angeordnet sind, wobei der Eingang und jeder Ausgang zwischen einer offenen und einer geschlossenen Position steuerbar sind, die erste Spritzdüse (7) mit einem der Ausgänge der Durchflussregeleinrichtung verbunden ist, und der Nebenleitungsabschnitt (8) mit dem anderen der Ausgänge der Durchflussregeleinrichtung verbunden ist,
die Durchflussregeleinrichtung in der offenen Position des Flüssigkeitseinlasses konfiguriert ist, um die Versorgung der ersten Düse (7) und/oder der Düsengruppe (9) mit Flüssigkeit zu ermöglichen, und die Durchflussregeleinrichtung in der geschlossenen Position des Flüssigkeitseingangs konfiguriert ist, die Versorgung der ersten Düse (7) und/oder der Düsengruppe (9) mit Flüssigkeit zu verhindern, die Durchflussregeleinrichtung in der offenen Position des mit der ersten Flüssigkeitsdüse (7) verbundenen Ausgangs konfiguriert ist, um die Versorgung der ersten Düse (7) zu ermöglichen, und die Durchflussregeleinrichtung in der geschlossenen Position des Flüssigkeitsausgangs konfiguriert ist, um die Versorgung der ersten Düse (7) zu verhindern,
die Durchflussregeleinrichtung in der offenen Position des anderen Flüssigkeitsausgangs konfiguriert ist, um die Versorgung des Nebenleitungsabschnitt (8) zu ermöglichen, und die Durchflussregeleinrichtung in der geschlossenen Position des anderen Flüssigkeitsausgangs konfiguriert ist, um die Versorgung des Nebenleitungsabschnitt (8) zu verhindern,
wobei der Spritzbalken (1) konfiguriert ist, um Flüssigkeit durch die erste Spritzdüse (7) und/oder durch mindestens eine Düse (10) der Spritzdüsengruppe (9) zu spritzen.

2. Spritzbalken (1) nach dem vorherigen Anspruch, wobei die Durchflussregeleinrichtung zwei steuerbare Ventile umfasst, wobei ein erstes steuerbares Ventil (61) an der Schnittstelle zwischen der Einlassleitung (5) und dem Nebenleitungsabschnitt (8) angeordnet ist und ein zweites steuerbares Ventil (62) an der Schnittstelle zwischen der Einlassleitung (5) und der ersten Spritzdüse (7) angeordnet ist, wobei der erste Ausgang der Durchflussregeleinrichtung dem Ausgang des ersten Ventils (61) entspricht und der zweite Ausgang der Durchflussregeleinrichtung dem Ausgang des zweiten Ventils (62) entspricht.

3. Spritzbalken (1) nach einem der vorherigen Ansprüche, wobei die Spritzdüsengruppe (9) mindestens zwei Spritzdüsen (10) umfasst, die durch den Nebenleitungsabschnitt (8) miteinander verbunden sind, wobei der sekundäre Leitungsabschnitt (8) konfiguriert ist, um Flüssigkeit von der Durchflussregeleinrichtung zu jeder Düse (10) der Spritzdüsengruppe (9) zu leiten.

4. Spritzbalken (1) nach dem vorherigen Anspruch, wobei eine Vielzahl von steuerbaren Ventilen (11) in dem Nebenleitungsabschnitt (8) angeordnet ist, jedes Ventil (11) der Vielzahl von Ventilen mit einer der Düsen (10) der Düsengruppe (9) assoziiert ist und jedes Ventil (11) zwischen einer Schließposition, in der es konfiguriert ist, um den Fluss der Flüssigkeit von dem Durchflussregelelement zu der Düse (10), mit der es assoziiert ist, zu verhindern, und einer Öffnungsposition, in der es konfiguriert ist, um den Fluss der Flüssigkeit von dem Durchflussregelelement zu der Düse (10), mit der es assoziiert ist, zu ermöglichen, bewegbar ist.

5. Spritzbalken (1) nach einem der vorherigen Ansprüche, wobei die Spritzdüsen (10) der Spritzdüsengruppe (9) in gleichem Abstand zueinander sind.

6. Spritzbalken (1) nach einem der vorherigen Ansprüche, wobei die Spritzdüsen (10) der Spritzdüsengruppe (9) 5 bis 25 cm voneinander entfernt sind.

7. Spritzbalken (1) nach einem der vorherigen Ansprüche, wobei die erste Spritzdüse (7) und/oder mindestens eine Spritzdüse (10) der Spritzdüsengruppe (9) in Bezug auf die Hauptleitung (2) geneigt ist.

8. Spritzbalken (1) nach einem der vorherigen Ansprüche, umfassend eine Vielzahl von Düsenhaltern (3), wobei jeder Düsenhalter (3) mit der Hauptleitung (2) verbunden ist.

9. Spritzbalken (1) nach dem vorherigen Anspruch, wobei die Düsenhalter (3) der Vielzahl von Düsenhaltern (3) gleich weit voneinander entfernt sind.

10. Spritzbalken (1) nach dem vorherigen Anspruch, wobei die Düsenhalter (3) der Vielzahl von Düsenhaltern (3) 25 cm oder 33 cm oder 50 cm voneinander entfernt sind.

## Claims

1. Spray boom (1) for an agricultural sprayer, comprising a primary duct (2) and at least one nozzle holder (3) connected to said primary duct (2) and comprising:
- a body (4) housing a liquid intake duct (5) configured to be supplied with liquid by said primary duct (2) and housing at least one flow regulating means;
- at least one first spray nozzle (7);
- at least one secondary duct section (8) extending in parallel to the primary duct (2);
- at least one group of spray nozzles (9) distributed over the secondary duct section (8);
said at least one flow regulating means being arranged at the interface between the intake duct (5), the first spray nozzle (7) and the secondary duct section (8) and comprising a liquid inlet and at least a first controllable outlet and a second controllable outlet disposed downstream of said primary duct (2), the inlet and each outlet being controllable between an open position and a closed position, the first spray nozzle (7) being connected to one of the outlets of the flow regulating means and the secondary duct section (8) being connected to the other of the outlets of the flow regulating means,
in the open position of the liquid inlet, said flow regulating means being configured to enable supply the first nozzle (7) and/or the group of nozzles (9) with liquid and, in the closed position of said liquid inlet, said flow regulating means being configured to prevent supply the first nozzle (7) and/or the group of nozzles (9) with liquid,
in the open position of the outlet connected to the first liquid nozzle (7), said flow regulating means being configured to enable supply of the first nozzle (7) and, in the closed position of said liquid outlet, said flow regulating means being configured to prevent supply of the first nozzle (7),
in the open position of the other liquid outlet, said flow regulating means being configured to enable supply of the secondary duct section (8) and, in the closed position of said other liquid outlet, said flow regulating means being configured to prevent supply of the secondary duct section (8),
said spray boom (1) being configured to spray liquid through said first spray nozzle (7) and/or through at least one nozzle (10) of said group of spray nozzles (9).

2. Spray boom (1) according to the preceding claim, wherein the flow regulating means comprises two controllable valves, a first controllable valve (61) being arranged at the interface between the intake duct (5) and the secondary duct section (8) and a second controllable valve (62) being arranged at the interface between the intake duct (5) and the first spray nozzle (7), the first outlet of the flow regulating means corresponding to the outlet of the first valve (61) and the second outlet of the flow regulating means corresponding to the outlet of the second valve (62).

3. Spray boom (1) according to any of the preceding claims, wherein the group of spray nozzles (9) comprises at least two spray nozzles (10) connected to each other through the secondary duct section (8), said secondary duct section (8) being configured to convey liquid from the flow regulating means to each nozzle (10) of said group of spray nozzles (9).

4. Spray boom (1) according to the preceding claim, wherein a plurality of controllable valves (11) are arranged in said secondary duct section (8), each valve (11) of said plurality of valves being associated with one of the nozzles (10) of the group of nozzles (9) and each valve (11) being movable between a closing position in which it is configured to prevent conveying of said liquid from the flow regulating member to the nozzle (10) with which it is associated, and an opening position in which it is configured to allow conveying said liquid from the flow regulating member to the nozzle (10) with which it is associated.

5. Spray boom (1) according to any of the preceding claims, wherein the spray nozzles (10) of the group of spray nozzles (9) are equidistant from each other.

6. Spray boom (1) according to any of the preceding claims, wherein the spray nozzles (10) of the group of spray nozzles (9) are spaced apart by 5 to 25 cm.

7. Spray boom (1) according to any of the preceding claims, wherein the first spray nozzle (7) and/or at least one spray nozzle (10) of the group of spray nozzles (9) is tilted relative to the primary duct (2).

8. Spray boom (1) according to any of the preceding claims, comprising a plurality of nozzle holders (3), each nozzle holder (3) being connected to said primary duct (2).

9. Spray boom (1) according to the preceding claim, wherein the nozzle holders (3) of the plurality of nozzle holders (3) are equidistant from each other.

10. Spray boom (1) according to the preceding claim, wherein the nozzle holders (3) of the plurality of nozzle holders (3) are spaced apart by 25 cm, or 33 cm or 50 cm.
